# EUROPEAN PATENT APPLICATION

(11) **EP 1 190 899 A1**
(43) Date of publication of application: **27.03.2002**
(21) Application number: 01203648.9
(22) Date of filing: 26.09.2001
(51) Int. Cl.: B60P 1/64, B60P 3/42, B62D 21/00

(54) **Multifunctional vehicle, method and auxiliary chassis therefor**

(30) Priority: 26.09.2000 NL 1016267
(71) Applicant: Van den Top, Hendrik, NL-3771 AH Barneveld (NL); Roordink, Gijsbert, 3781 AP Voorthuizen (NL)
(72) Inventor: Van den Top, Hendrik, NL-3771 AH Barneveld (NL); Roordink, Gijsbert, 3781 AP Voorthuizen (NL)
(74) Representative: Land, Addick Adrianus Gosling

(57) **Abstract**

1. Vehicle, comprising:
   - a main chassis with front and rear wheels arranged thereon;
   - a passenger cab arranged on the main chassis;
   - coupling means arranged on the main chassis for coupling a semi-trailer;
   - an auxiliary chassis which can be mounted releasably on the main chassis for supporting cargo and/or a superstructure; and
   - a sub-chassis which can be mounted releasably on the main chassis and which in the mounted situation extends rearward relative to the main chassis and the rear wheels in order to support the auxiliary chassis.

## Description

The present invention relates to a light truck for which only a usual driving licence for passenger cars is required. Different weight classes apply for this purpose in different European countries, for instance up to 3,500 kg, 5,000 kg, 7,500 kg or 12,000 kg. Such light trucks are used in many sectors, such as contractors, market traders and the like, while they will also be of increasing importance for distribution in inner cities which are difficult to access. Such vehicles can further be used to pull trailers such as caravans, horse trailers and the like.

Known from the American patent US-A-5,772,229 is a light truck, such as a so-called pick-up truck, which is provided with a fifth wheel for coupling of a gooseneck, for instance for a caravan or horse trailer or other trailer, wherein for a better weight distribution the fifth wheel is displaceable from a position in front of the rear wheels of the vehicle to a position behind them.

The present invention provides a vehicle, comprising:
- a main chassis with front and rear wheels arranged thereon;
- a passenger cab arranged on the main chassis;
- coupling means arranged on the main chassis for coupling a semi-trailer;
- an auxiliary chassis which can be mounted releasably on the main chassis for supporting cargo and/or a superstructure; and
- a sub-chassis which can be mounted releasably on the main chassis and which in the mounted situation extends rearward relative to the main chassis and the rear wheels in order to support the auxiliary chassis.

In addition to the tractive function using the fifth wheel, the vehicle according to the present invention can be made suitable to transport cargo using the auxiliary chassis supported by the main chassis which is extended by the sub-chassis to a position behind the rear wheels of the vehicle, whereby the vehicle is suitable for more or longer cargo, such as legs, planks and the like, for instance with a length of about 3.5 metres (or more).

An auxiliary chassis mounted at least partly releasably on a truck is per se known from the American patent US-A-4,969,690. The vehicle described herein is however a heavy truck with double rear wheels, while the present invention particularly and preferably relates to a light truck with single rear wheels, so that a user may drive this with a standard car driving licence.

A further preferred embodiment provides that the coupling means are a fifth wheel. A fifth wheel is very practical for use with semi-trailers.

These coupling means are preferably mounted displaceably on the main chassis so that, depending on the weight of the semi-trailer, the weight distribution over the axles of the vehicle can then be optimized.

These coupling means preferably do not protrude to a position above the auxiliary chassis when this latter is arranged on the main chassis. This has the advantage that it is then possible to have a flat loading floor available when the vehicle is used as truck. The height of the auxiliary chassis can be adapted for this purpose to the height of mounted coupling means.

In a preferred embodiment the main chassis and/or the sub-chassis are provided with centring means for precise centring of the auxiliary chassis. The advantage hereof is that change-over of the invention between the different situations can take place quickly.

The auxiliary chassis must be mounted firmly on the vehicle. The main chassis and/or the sub-chassis are preferably at least provided for this purpose with swing clamps. These provide the advantage that they are not very expensive and can be disconnected quickly while being safe in use as securing means.

In order to be suitable for pulling normal trailers as well as semi-trailers, the vehicle is preferably provided with a towing hook fixed to the main chassis and/or the sub-chassis.

Since the auxiliary chassis is quite a heavy construction, it is preferably provided with fixing means for fixing legs for supporting the auxiliary chassis during (dis)connection (from)/to the main chassis. These legs can be provided with wheels and a lifting mechanism to move the auxiliary chassis up and downward to perform the fixing operations.

In a following preferred embodiment of the invention the auxiliary chassis is provided with collapsible legs. This has the advantage that the legs are always available when the auxiliary chassis must be disconnected.

The present invention further provides an auxiliary chassis for placing on a main chassis of a vehicle with coupling means, for supporting cargo and/or a superstructure on a truck with coupling means, comprising:
- a frame;
- an opening in the frame for enclosing the coupling means in all possible positions in which these coupling means can be placed. This auxiliary chassis can be further provided with centring means for simple centring of the auxiliary chassis on the main chassis. This simplifies and speeds up the placing operation considerably. The same applies for the arranging of legs on the auxiliary chassis.

The present invention also comprises a method for shortening a main chassis of a vehicle so as to make it suitable for multi-functional use, comprising the following steps of:
- shortening the main chassis;
- mounting coupling means for coupling a semi-trailer.

This method can also comprise the following steps, for also making the chassis suitable for mounting of an auxiliary chassis, of:
- mounting fixing means as stated above.

The present invention also comprises a method for making a vehicle comprising a main chassis suitable for more purposes, comprising the following steps of:
- placing an auxiliary chassis over the main chassis;
- lowering the auxiliary chassis against the main chassis;
- fixing the auxiliary chassis to the main chassis;
- displacing the legs so that during travel they do not represent a hazard to road users and can no longer contact the ground.

This method can comprise as additional step the use of centring means during lowering of the auxiliary chassis for the purpose of simple centring during this step.

Further advantages, features and details of the present invention will be elucidated on the basis of the following description of a preferred embodiment thereof with reference to the annexed drawings, in which:
- fig. 1 shows a view in perspective of respective preferred embodiments of a light vehicle, an auxiliary chassis and a sub-chassis according to the present invention;

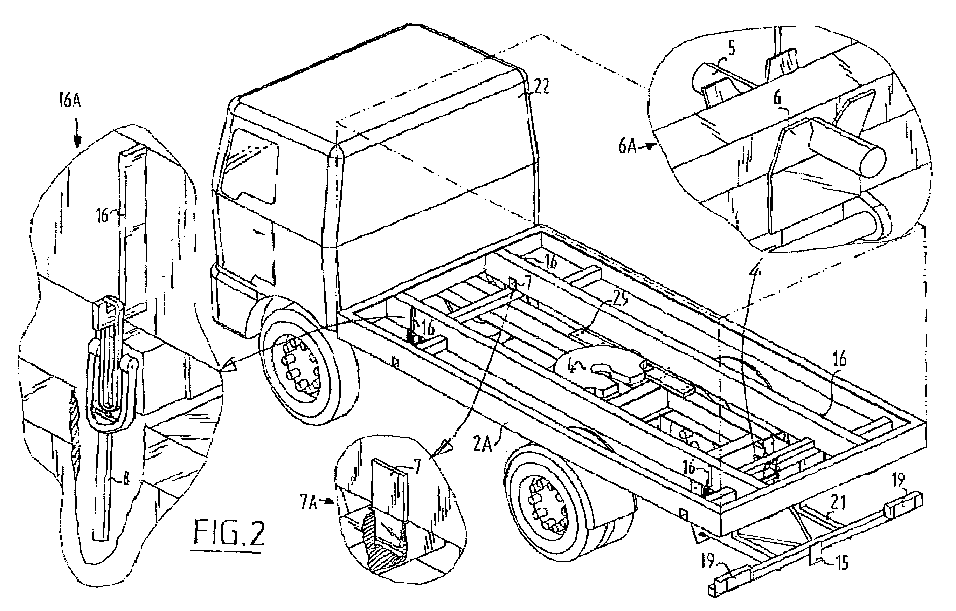

- fig. 2 shows a view in perspective of the embodiment of fig. 1 in assembled state with enlargements of details; and
- fig. 3 is a view in perspective of a second preferred embodiment of the present invention.

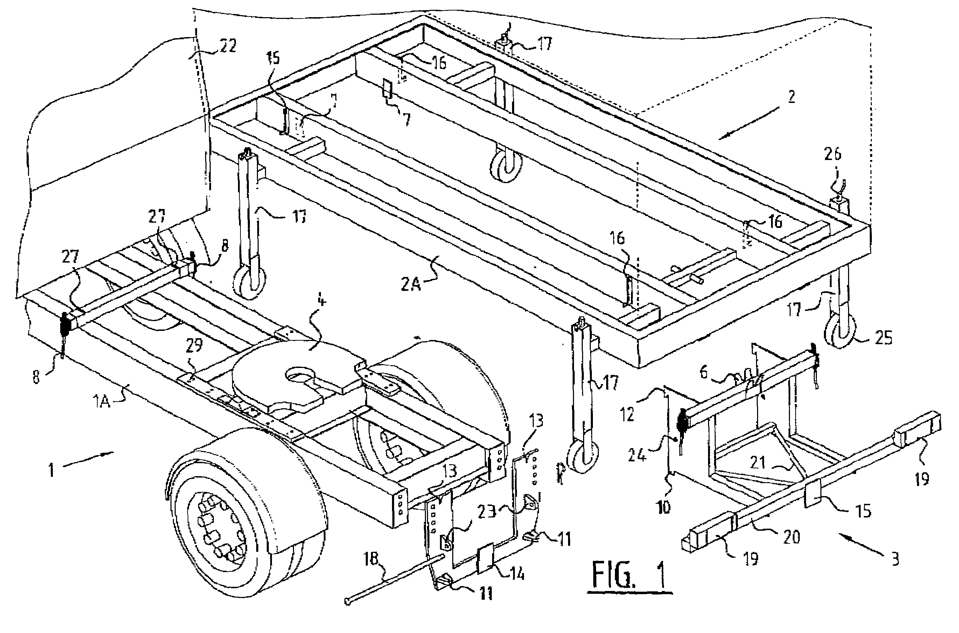

A vehicle according to the preferred embodiment of the present invention (fig. 1) is a light truck 1 comprising a cab 22 and a main chassis 1A on which a fifth wheel 4 is mounted. This fifth wheel 4 serves for coupling of a semi-trailer (not shown). The embodiment further comprises a sub-chassis 3. This sub-chassis can be mounted releasably on main chassis 1A. The unit of main chassis and sub-chassis in this embodiment is equipped with fixing means for fixing a superstructure for cargo. This superstructure consists of at least an auxiliary chassis (frame) on which for instance a floor (not shown), optionally with side flaps, can be arranged, but which can also consist of a closed loading space or similar arranged on the auxiliary chassis.

For mounting of the sub-chassis the main chassis 1A is provided with a mounting plate 9 which can be fixed thereto and is provided with slots 13 and eyes 11 into which the sub-chassis 3 can be hooked. Locking pin eyes 23 provide together with locking pin 18 a firm locking of the sub-chassis to the main chassis. Two swing clamps 8 are also arranged for locking of the auxiliary chassis. The main chassis is also provided with slots 27 for receiving centring plates 7.

For fixing on the mounting plate 9 of main chassis 1A, sub-chassis 3 is provided with lower hooks 10 and upper hooks 12 for hooking into eyes 11 respectively slots 13. Locking pin 18, which is placed through holes 24 and 23, serves to lock the sub-chassis during mounting on the main chassis. If desired, this locking pin 18 can also be embodied as two shorter locking pins. The sub-chassis is further provided with centring plates 6 which centre the auxiliary chassis to be mounted toward the centre of the truck at the rear and fix it in longitudinal direction. Sub-chassis 3 is further provided with a bumper beam 20 on which are arranged plates 19 for attaching rear lights as well as plates 15 for mounting a towing hook. Further provided are strengthening beams 21 for transmitting forces on bumper beam 20 to the main chassis.

Swing clamps 24 are further arranged on the sub-chassis for locking the auxiliary chassis. Auxiliary chassis 2 consists of a steel assembly 2A which serves for sturdiness and fixing to the main chassis and the sub-chassis. A centring pin 5 serves to fit into centring plates 6. Together with the beam to which the centring pin is fixed, a positioning of the rear part of the auxiliary chassis is realized. The front part of the auxiliary chassis and the centring plates 7 can then be positioned correctly by moving them downward. The assembly is then completed by fastening swing clamps 8 and 24 to hooks 16.

The legs 26, also referred to as support legs, facilitate arranging of the auxiliary chassis on the main chassis and the sub-chassis. These support legs are preferably provided with wheels in order to displace the auxiliary chassis. The legs can also be provided with a lifting mechanism, here embodied with handles with which the legs can be made longer and shorter for raising or lowering of the auxiliary chassis. This lifting mechanism is embodied by means of a rod which is rotatable by the handle and which is provided with screw thread and guided through an underside of the leg, also provided with screw thread, for displacing thereof up and downward.

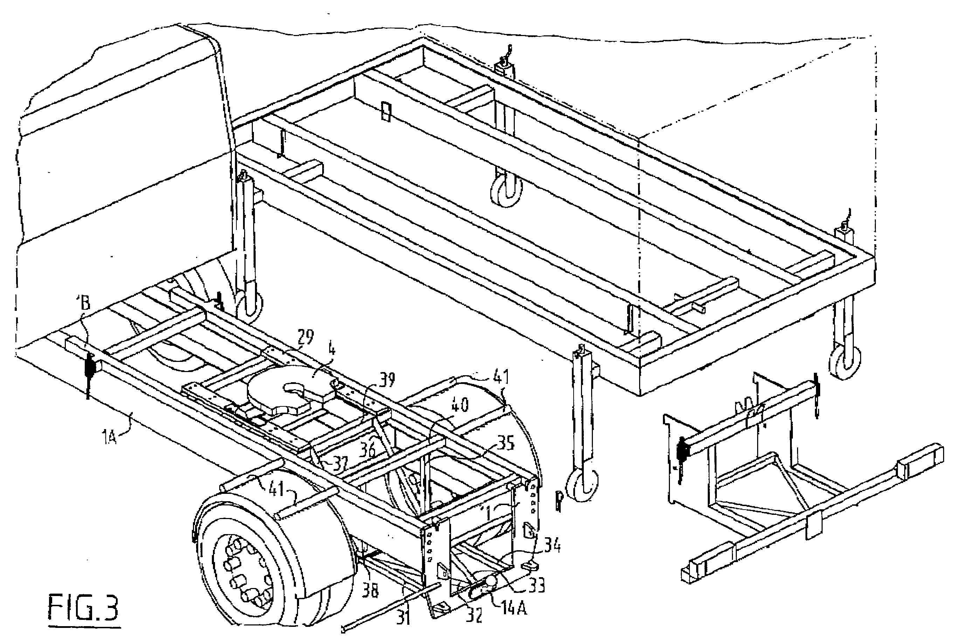

By arranging the auxiliary chassis on the short, useful main chassis, which is particularly suitable for pulling a semi-trailer, a delivery van (fig. 3) is obtained with a long cargo space by using the sub-chassis.

Detail 16A shows how the swing clamp works. Hook 16 is fixed to the auxiliary chassis. The active part of the swing clamp is fastened to the auxiliary chassis. By now pulling the swing clamp downward by hand the auxiliary chassis is fixed to the main chassis.

Detail 6A shows centring plate 6 which takes a dual form with the purpose that when the auxiliary chassis is lowered onto the sub-chassis, the former is positioned correctly in the longitudinal direction. Also shown in this detail are two substantially U-shaped slots which serve to align the auxiliary chassis 5 in the centre when the auxiliary chassis is lowered onto the main chassis, in that centring pin 5 drops into the substantially U-shaped slots.

Detail 7A shows centring plate 7 which takes a dual form in order to align the auxiliary chassis in the centre relative to the main chassis.

Prior to mounting of the auxiliary chassis the sub-chassis is first mounted on the main chassis. This takes place by hooking hooks 10 and hooks 12 into eyes 11 respectively slots 13. Locking pin 18 can then be placed through the eye holes. Auxiliary chassis 2 can then be driven above the truck. For simple centring it is now advantageous to first lower the rear part of the auxiliary chassis so that the rear part is positioned by means of centring pin 5. This lowering takes place by operating the legs 17. The front side of the auxiliary chassis can then be lowered in similar manner. The centring plates will ensure that the auxiliary chassis is automatically positioned correctly. The auxiliary chassis is then locked by means of swing clamps. Finally, the legs are removed from the auxiliary chassis.

In a further preferred embodiment of the invention (fig. 3) the main chassis is divided into two parts. As well as part 1A, this embodiment comprises an additional chassis part 1B. This has the advantage that chassis part 1B can be produced regardless of the presence of part 1A, and can be provided with mounting means 29 for the fifth wheel 4. Fifth wheel 4 can also be mounted beforehand. Strengthening means can further be arranged on chassis part 1B in order to strengthen rear plate 11. These strengthening means consist of horizontal chassis parts 31, 32, 33, 34, vertical chassis parts 35, 38 and oblique chassis parts 36, 37. These parts are fixed to the horizontal tubes 39, 40 of chassis part 1B. Rear plate 11 can then be attached, whereafter the assembly can be mounted on chassis part 1A. Chassis part 1A is generally supplied in its non-shortened form by truck manufacturers such as Volkswagen, Renault and the like. Towing hook 14A is shown fitted on the underside of rear plate 11 of the main chassis. The strengthening assembly as described above serves to transmit to the main chassis the forces exerted by a trailer on towing hook 14A. The strengthening assembly also serves to transmit the forces of sub-chassis 3 to the other parts of the main chassis.

The present invention is not limited to the above described preferred embodiment; the rights sought are defined by the following claims, within the scope of which many modifications can be envisaged.

## Claims

1. Vehicle, comprising:
- a main chassis with front and rear wheels arranged thereon;
- a passenger cab arranged on the main chassis;
- coupling means arranged on the main chassis for coupling a semi-trailer;
- an auxiliary chassis which can be mounted releasably on the main chassis for supporting cargo and/or a superstructure; and
- a sub-chassis which can be mounted releasably on the main chassis and which in the mounted situation extends rearward relative to the main chassis and the rear wheels in order to support the auxiliary chassis.

2. Vehicle as claimed in claim 1, wherein the vehicle is provided with two single rear wheels.

3. Vehicle as claimed in claim 1 or 2, wherein the coupling means comprise a fifth wheel which is preferably displaceable relative to the longitudinal direction of the main chassis.

4. Vehicle as claimed in one or more of the claims 1-3, wherein the main chassis and/or sub-chassis are provided with centring means for centring of the sub-chassis.

5. Vehicle as claimed in one or more of the foregoing claims, wherein the main chassis and/or sub-chassis is provided with a towing hook.

6. Vehicle as claimed in one or more of the foregoing claims, wherein the auxiliary chassis is provided with preferably collapsible legs for supporting the auxiliary chassis during connecting or disconnecting of the auxiliary chassis to or from the main chassis, wherein the legs are preferably provided with wheels and/or lifting means.

7. Auxiliary chassis evidently suitable for a vehicle as claimed in one or more of the foregoing claims.

8. Method for adapting a light truck, for instance in a weight class up to 3,500 kg, 5,000 kg, 7,500 kg and/or 12,000 kg, comprising the following steps of:
- shortening a main chassis of the vehicle;
- arranging a fifth wheel on the main chassis; and
- arranging mounting means on the main chassis for releasable mounting thereon of an auxiliary chassis and a sub-chassis.

9. Method for converting a light truck which is provided with a fifth wheel, comprising the following steps of:
- mounting a sub-chassis on a main chassis of the truck;
- positioning the main chassis with sub-chassis relative to an auxiliary chassis; and
- fixing the auxiliary chassis to the main and sub-chassis.

10. System of a main chassis, auxiliary chassis, sub-chassis and/or mounting means for mounting the sub-chassis on the main chassis, substantially in accordance with the foregoing description and associated figures.
